**Europäisches Patentamt**

**European Patent Office**

**Office européen des brevets**

(11) Veröffentlichungsnummer : **0 261 309 B1**

(12) **EUROPÄISCHE PATENTSCHRIFT**

(45) Veröffentlichungstag der Patentschrift :
04.09.91 Patentblatt 91/36

(51) Int. Cl.⁵ : **F16J 12/00**

(21) Anmeldenummer : **87107424.1**

(22) Anmeldetag : **21.05.87**

(54) Druckbehälter und Verfahren zu seiner Herstellung.

(30) Priorität : **19.09.86 DE 3631975**

(43) Veröffentlichungstag der Anmeldung :
**30.03.88 Patentblatt 88/13**

(45) Bekanntmachung des Hinweises auf die
Patenterteilung :
**04.09.91 Patentblatt 91/36**

(84) Benannte Vertragsstaaten :
**AT BE CH DE ES FR GB GR IT LI LU NL SE**

(56) Entgegenhaltungen :
**DE-C- 3 523 570**
**DE-U- 8 408 506**
**FR-A- 2 582 570**
**GB-A- 935 332**
**GB-A- 1 132 081**

(73) Patentinhaber : **Ehs, Eugen**
**Agnesstrasse 46**
**W-8000 München 40 (DE)**

(72) Erfinder : **Ehs, Eugen**
**Agnesstrasse 46**
**W-8000 München 40 (DE)**

(74) Vertreter : **Patentanwälte Grünecker,**
**Kinkeldey, Stockmair & Partner**
**Maximilianstrasse 58**
**W-8000 München 22 (DE)**

## Beschreibung

Die Erfindung betrifft einen Druckbehälter der im Oberbegriff des Patentanspruchs 1 angegegebenen Art, sowie gemäß Anspruch 17 ein Verfahren zum Herstellen solcher Druckbehälter.

Bei einem aus der DE-A- 30 07 524 bekannten Druckbehälter gibt die Außenoberfläche eines nach einem Blasverfahren hergestellten Kunststoff-Innenbehälters die spätere Gestalt des Druckbehälters vor. Der Innenbehälter besitzt einen offenen Stutzenansatz und einen nach außen bombierten Boden. Auf beide Enden des Innenbehälters sind Verstärkungskappen aufgesetzt, von denen die eine einen den Stutzenansatz des Innenbehälters umfassenden Kragen und die andere einen nach außen abstehenden Zapfen besitzt. Die Verstärkungskappen haben die Funktion von Wickelhilfskörpern mit Hohlkehlen bzw. Schultern, an denen beim schraubenförmigen Aufbringen der Wickelbeschichtung jeweils die Schraubensteigungsrichtung umgekehrt wird. Jeweils ein Innenbehälter wird mit den Versteifungskappen in einer Wickelvorrichtung mit der Wickelbeschichtung versehen, d.h., ein Druckbehälter wird nach dem anderen erzeugt. Nachteilig ist dabei der Aufwand zur Herstellung des Innenbehälters, der im fertigen Druckbehälter hauptsächlich einen verlorenen Kern darstellt, trotzdem aber formgenau und mit dem jeweils gewünschten Fassungsvermögen des Druckbebehälters hergstellt werden muß. Der Kostenanteil für die Herstellung des Innenbehälters und die Versteifungskappen ist ein bei den Gesamtkosten des Druckbehälters wesentlicher Faktor.

Bei einem aus der DE-A- 28 07 966 bekannten Verfahren zur Herstellung eines Druckbehälters wird ebenfalls nach einem Blasverfahren ein Kunststoff-Innenbehälter hergestellt, auf dessen Enden Versteifungskappen aufgesetzt werden, ehe die GFK-Wickelbeschichtung aufgebracht wird. Auch hierbei ist für die Herstellung des Innenbehälters ein erheblicher Aufwand zu treiben, so daß die Kosten für den Innenbehälter einen wesentlichen Faktor der Gesamtkosten des fertigen Druckbehälters darstellen.

Ein Druckbehälter gemäß GB-A-11 32 081 besteht aus einem dünnen, rohrförmigen Metall-Stützkörper und einer den Stützkörper umgebenden Wickelbeschichtung aus faserverstärktem Kunstharz. An einem Ende oder an beiden Enden des Stützkörpers ist ein Stutzenansatz vorgesehen. Die Wickelbeschichtung erstreckt sich bis zum Übergang zwischen den Stutzenansatz und dem Stützkörper.

Aus einem Prospekt der Firma Singer, Controls Division, 9655 Soreng AVE, Ill., USA, herausgegeben 1984 "mobile air conditioning service bulletin", sind aus Metall bestehende Druckbehälter bekannt, die als Trocknerbehälter für Fahrzeug-Klimaanlagen eingesetzt werden. Die Druckbehälter werden aus aus Stahlblech gezogenen Behälterober- und Behälterunterteilen hergestellt, die durch Schweißnähte miteinander verbunden werden. Der gravierendste Nachteil dieser bekannten Druckbehälter ist ihr relativ hohes Gewicht, das gerade bei Fahrzeug-Klimaanlagen als besonders nachteilig angesehen wird.

Der Erfindung liegt die Aufgabe zugrunde, einen Druckbehälter der eingangs genannten Art zu schaffen, der kostengünstiger ist als die bekannten, sowie ein Verfahren zum kostengünstigen Herstellen solcher Druckbehälter anzugeben.

Die gestellte Aufgabe wird mit den im kennzeichnenden Teil des Patentanspruchs 1 angegebenen Maßnahmen gelöst.

Bei dieser Ausbildung wird ein Standardrohling aus der Massenproduktion von Spraydosen oder Getränkebehältern verwendet. Solche Standardrohlinge werden in millionenfacher Anzahl hergestellt und sind sehr preiswert auf dem Markt erhältlich. Das für Spraydosen oder Getränkebehälter übliche Material wie Metall oder Kunststoff ist mit einfachen Werkzeugen und leicht verformbar, um zumindest im Bereich des späteren Behälteroberteils die gewünschte Kontur zu schaffen, da die Wandstärke im zylindrischen Bereich nur wenige Zehntelmillimeter beträgt. Die Formstabilität des Standardrohlings ist hingegen so groß, daß er den beim Aufbringen der Wickelbeschichtung zwangsweise auftretenden Kräften widersteht. Die Beschaffungskosten für die Standardrohlinge und auch der zusätzliche Arbeitsaufwand zu ihrer Verformung spielen bei den Gesamtkosten des Druckbehälters keine nennenswerte Rolle mehr. Wird der Druckbehälter als Trocknerbehälter für Fahrzeug-Klimaanlagen eingesetzt, so sind nicht nur die geringen Herstellungskosten aufgrund der Verwendung der Standardrohlinge ein erheblicher Vorteil, sondern auch das bis um 50% gegenüber dem Gewicht der herkömmlichen, metallischen Trocknerbehälter reduzierte Gewicht.

Da das Aufbringen der Wickelbeschichtung ebenfalls kostenintensiv ist, ist Anspruch 2 besonders wichtig, weil mit den am Stützkörper vorgesehenen Kupplungselementen mehrere Stützkörper hintereinanderliegend zu einer Wickeleinheit verbunden werden, auf die sich die Wickelbeschichtung in einem Zug aufbringen läßt, so daß das teure übliche Einzelwickeln der Druckbehälter-Stützkörper entfällt. Die anteiligen Kosten für die Herstellung der Wickelbeschichtung auf jedem Stützkörper werden dadurch so weit reduziert, daß der Druckbehälter insgesamt sehr kostengünstig hergestellt werden kann. Mit Standardrohlingen ergibt sich gerade bei einer Massenproduktion eine weitere Verbilligung der Druckbehälter.

Vorteilhaft ist die Ausführungsform gemäß Anspruch 3, bei der zumindest auf das geschlossene, dem Behälteroberteil mit dem Stutzenansatz gegenüberliegende Ende des Stützkörpers außen ein in die Wickelbeschichtung einbezogener Wickelhilfskörper aufgesetzt ist. Der Wickelhilfskörper hat eine Doppelfunktion, weil er das Aufbringen der Wickelbeschichtung beim jeweiligen Wechsel des Wickelrichtungsanstiegs vereinfacht und die Druckfestigkeit des Bodens des Stützkörpers erhöht.

Vorteilhaft ist es dabei, gemäß Anspruch 4 vorzugehen, weil der Standardrohling als Stützkörper keinerlei Bearbeitung im Bodenbereich benötigt.

Besonders vorteilhaft ist die Ausführungsform von Anspruch 5, weil - wie erwähnt - die Beschaffungskosten für solche Standardrohling gering sind.

Zweckmäßig ist die Ausführungsform von Anspruch 6, weil der Wickelhilfskörper genau zum Stützkörper paßt.

Alternativ ist auch eine Ausführungsform gemäß Anspruch 7 zweckmäßig. Der bombierte Boden des Stützkörpers vergrößert das Fassungsvermögen des Druckbehälters, ist druckfester als ein ebener Boden und benötigt - wenn überhaupt - nur einen einfachen Wickelhilfskörper, weil er dank der Bombierung von vornherein für das Aufbringen der Wickelbeschichtung geeignet ist. Bei dem Material, aus dem Standardrohlinge aus der Spraydosen- oder Getränkebehälter-Massenproduktion bestehen, ist zum Bombieren des Bodens nur ein einfaches Werkzeug notwendig.

Eine weitere vorteilhafte Ausführungsform geht aus Anspruch 8 hervor. Bei dieser Ausbildung besitzt der Druckbehälter im fertigen Zustand oben und unten eine Einlaßöffnung, wie sie für bestimmte Anwendungszwecke wünschenswert ist. Beispielsweise werden Trocknerbehälter für Fahrzeug-Klimaanlagen häufig mit einer unteren und einer oberen Anschlußarmatur benötigt.

Als besonders zweckmäßig erweisen sich die Materialien von Anspruch 9. Der Stützkörper braucht im Druckbehälter nur die Form und die Kontur des späteren Behälters vorzugeben, die das Aufbringen der Beschichtung ermöglicht. Diese Anforderungen erfüllen die Rohlinge gemäß Anspruch 9 auf einfache Weise.

Zweckmäßig ist gemäß Anspruch 10 bei Aluminiumblech eine so geringe Wandstärke, um die Wickelbeschichtung einwandfrei aufbringen zu können. Damit ist ein geringes Gesamtgewicht des Stützkörpers erreichbar.

Eine wichtige Ausführungsform geht aus Anspruch 11 hervor. Die Anschlußarmatur wird haltbar, dicht und gesichert mit dem Stützkörper verbunden. Die Dichtigkeit wird problemlos erreicht, wobei beispielsweise die Klebeverbindung zusätzliche Sicherheit gegen Undichtwerden und Lockern der Anschlußarmatur gewährleistet.

Das Prinzip von Anspruch 12 ist auch bei Druckbehältern nutzbar, bei denen der Stützkörper kein Standardrohling aus der Massenproduktion von Spraydosen und Getränkebehältern ist. Dadurch, daß am Stützkörper der Schraub-, Bajonett- oder Steckkupplungsteil und ein Gegenelement vorgesehen ist, lassen sich mit einem derart vorbereiteten Stützkörper weitere Stützkörper über gleichartige Schraub-, Bajonett- und Steckkupplungsteile bzw. Gegenelemente verbinden, derart, daß mehrere miteinander verbundene Stützkörper gemeinsam weiteren Arbeitsschritten unterworfen werden können, z.B. dem Aufbringen einer durchgehenden Wickelbeschichtung.

Eine preiswerte Variante gibt Anspruch 13 an. Mittels der Gewindebohrung und des Schraubansatzes läßt sich eine drehfeste, biegesteife und einspannbare Verbindung der Stützbehälter schaffen, um diese gemeinsam einem weiteren Arbeitsverfahren zu unterwerfen. Auch mit einer bajonettverschlußähnlichen Kupplung läßt sich diese Forderung erfüllen.

Zweckmäßig ist ferner der Gedanke von Anspruch 14, weil die zum Verbinden von Stützkörpern benutzte Gewindebohrung später zum Einschrauben des für die Funktion des Druckbehälters benötigten Armaturenelementes genutzt wird. Bisher wurde diese Gewindebohrung vor der Benutzung des Druckbehälters vergossen. Das kann nach wie vor geschehen. Zuvor wird nach dem Einschrauben des Armaturenelementes jedoch die Gewindebohrung zum Verbinden der ein Zwischenprodukt bei der Herstellung solcher Druckbehälter darstellenden Stützkörper benutzt.

Eine weitere Ausführungsform geht aus Anspruch 15 hervor. Zur Verbindung mehrerer Stützkörper wird das zusätzliche Gewindekupplungsteil benutzt, das nur für das Bearbeiten der Stützkörper bei der Herstellung der Druckbehälter benutzt werden kann.

Eine wichtige Ausführungsform geht aus Anspruch 16 hervor. Bei der Verwendung von Standardrohlingen mit den angegebenen geringen Wandstärken im zylindrischen Teil können bei der Verwendung des Druckbehälters mit hohen Innendrücken (120 bar oder mehr) gegebenenfalls Schwierigkeiten im Bereich des Behälteroberteils auftreten. Die Versteifungshülse gewährleistet in diesem kritischen Bereich die erforderliche Ausbeul- und Verformungsfestigkeit und stützt den Behälteroberteil gegen Verformen, wobei gerade der untere Rand der Versteifungshülse im Übergangsbereich vom Stutzenansatz zum Behälteroberteil ein ringförmiges starres Widerlager bildet.

Das in Anspruch 17 angegebene Verfahren zum Herstellen der Druckbehälter führt zu niedrigen Gesamtkosten und zu einem geringen Gewicht der Druckbehälter.

Die Verfahrensvariante von Anspruch 18 ist vorteilhaft. Der üblicherweise 2 bis 3 mm starke Boden solcher Standardrohlinge hält dieser nachträglichen Verformung, die mit einfachen Werkzeugen und in einem problemlosen Arbeitsschritt vorgenommen werden kann, ohne weiteres Stand.

Bei der Verfahrensvariante gemäß Anspruch 19 ist für den Wickelhilfskörper der Kostenaufwand gering.

Eine weitere, kostengünstige Verfahrensvariante geht aus Anspruch 20 hervor. Diese Druckbehälter haben an beiden Enden einen Zugang zum Inneren. Das Bombieren und Öffnen des Bodens ist bei dem Material der Standardrohlinge einfach.

Die bekannten Druckbehälter werden üblicherweise mit beträchtlichem Arbeitsaufwand einzeln mit der Wickelbeschichtung versehen. Dies wird auf einfache Weise mit dem Verfahren gemäß Anspruch 21 vermieden. Die Wickeleinheit kann eine nur durch die Kapazität der Wickelvorrichtung beschränkte Anzahl solcher, miteinander verbundener Stützkörper enthalten, die dann in einem Zug mit der Wickelbeschichtung versehen werden, so daß die Kapazität der Wickelvorrichtung optimal ausgenutzt und Stillstands- und Umrüst- und Spannzeiten auf ein Minimum reduziert werden.

Die Merkmale von Anspruch 22 sind wichtig, weil aus der Verwendung von Standardrohlingen aus der Massenproduktion von Spraydosen oder Getränkebehältern ein spürbarer Kostenvorteil und ein Gewichtsvorteil bei der Herstellung solcher Druckbehälter resultiert.

Anhand der Zeichnung werden nachstehend Ausführungsformen des Erfindungsgegenstandes erläutert. Es zeigen:

Fig. 1 eine schematische Ansicht eines Druckbehälters, und zwar eines Trocknerbehälters für eine Fahrzeug-Klimaanlage,

Fig. 2a die linke Hälfte des Druckbehälters von Fig. 1 in einem Zwischenstadium in seiner Herstellung , im Schnitt,

Fig. 2b die rechte Hälfte des Druckbehälters im Endstadium seiner Herstellung,

Fig. 3 einen Schnitt durch eine andere Ausführungsform in einem Zwischenstadium der Herstellung des Druckbehälters,

Fig. 4 den Behälteroberteil einer weiteren Ausführungsform eines Druckbehälters, im Schnitt, links in einem Zwischenstadium, rechts im Endstadium der Fertigung,

Fig. 4a den zugehörigen Behälterunterteil, im Schnitt, links in einem Zwischenstadium, rechts in Endstadium der Herstellung,

Fig. 4b eine andere Ausführungsform des Behälterunterteils im Schnitt, links in einem Zwischenstadium, rechts im Endstadium der Herstellung, und

Fig. 5 schematisch eine Vorrichtung, in der mehrere Druckbehälter hergestellt werden.

Ein Druckbehälter 1, insbesondere ein Trocknerbehälter für eine Klimaanlage, und zwar für eine Fahrzeug-Klimaanlage, hat ein hohles Behältergehäuse 2 mit einem unteren domförmigen Abschluß 3 und einem zylindrischen unteren Stutzen 4. Oben ist das Behältergehäuse 2 domförmig verformt und in einen Kragen 6 übergeführt. Eine dort festgelegte Anschlußarmatur 7 besitzt gegenüberliegende Anschlüsse für Leitungen 8, 9 sowie eine strichliert angedeutete Bohrung 10 für ein im Inneren des Trocknerbehälters 1 nach unten verlaufendes, strichliert angedeutetes Auslaßrohr 11. Im Inneren sind schichtweise angeordnete Filter- und Trocknerkomponenten 12 durch Stützelemente 31 gehalten. Die Leitung 8 ist mit dem Rohr 11 verbunden. Die Aufnahme 10 ist gegebenenfalls vergossen. Die Leitung 9 ist über einen Kanal 9a mit dem Inneren des Druckbehälters 1 verbunden. Der Druckbehälter 1 ist mit einem Innendruck von über 100 bar beaufschlagbar. Der Stutzen 4 hat wie der Kragen 6 einen Außendurchmesser d, der annähernd der Hälfte des Außendurchmessers D des Behältergehäuses 2 entspricht.

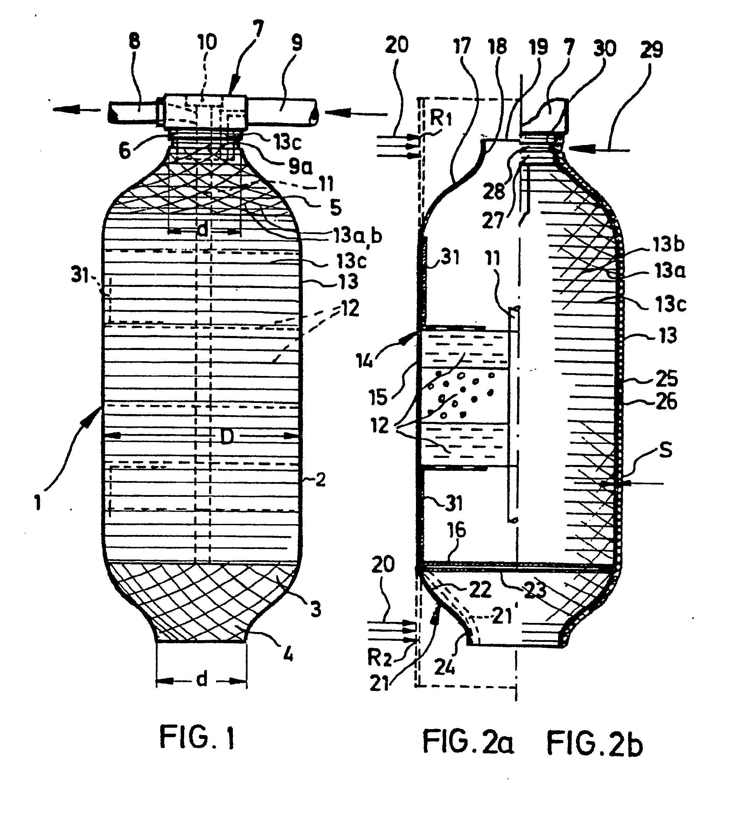

Anhand der Fig. 2a und 2b werden der innere Aufbau und die Herstellung des Druckbehälters 1 von Fig. 1 erläutert.

Zur Herstellung des Druckbehälters 1 wird zunächst ein zylindrischer Standardrohling R1 (strichliert angedeutet) bereitgestellt, der aus der Massenproduktion von Spraydosen oder Getränkebehältern stammt und üblicherweise aus einem tiefgezogenen Aluminiumblech in einer Wandstärke von 0,45 mm oder weniger besteht. In gleicher Weise könnten auch Rohlinge aus Stahlblech oder Kunststoff mit ähnlich dünner Wandstärke verwendet werden. Der Rohling R1 bildet einen Stützkörper 14 für den späteren Trocknerbehälter 1 und besitzt eine zylindrische Wandung 15 und einen ebenen unteren Boden 16 mit beispielsweise einer Dicke von 1,3 - 2,5 mm. Vom offenen Ende des Rohlings R1 sind nacheinander das untere Stützelement 31, die Filter- und Trocknungskomponenten 12 (Filterkörper und eine Patrone mit Silikagel), das Rohr 11 und das obere Stützelement 31 eingeschoben. Diese Komponenten können eine bereits vorgefertigte Baueinheit bilden. Nahe seinem oberen offenen Ende wird der Rohling R1 durch Drücken, Rollen oder Pressen (durch Pfeile 20 angedeutet), dann so verformt, daß sich ein domförmiger Oberteil 17 und ein annähernd zylindrischer Stutzenansatz 18 ergeben. Der Stutzenansatz 18 bildet später den in Fig. 1 angedeuteten Kragen 6; er ist bei 19 zum Anbringen der Anschlußarmatur 7 offen.

Auf der Außenseite des Bodens 16 ist ein Wickelhilfskörper 21 aufgesetzt, der ebenfalls ein aus der Massenproduktion von Spraydosen oder Getränkebehältern stammender Standardrohling R2 sein kann, und zweckmäßigerweise nur kürzer ist, als der Rohling R1. Durch Rollen, Pressen oder Drücken (durch Pfeile 20 angedeutet) ist der Standardrohling R2 so verformt, daß er einen domförmigen Außenmantel 22 oder einen konischen Außenmantel 21' sowie einen unterseitigen zylindrischen Stutzen 24 erhält, der dem dem Stutzenansatz 18 gleicht. Der Wickelhilfskörper 21 kann einen ebenen Boden 23 haben, der im Außendurchmesser dem Boden 16 entspricht und bündig an diesen anliegt. Denkbar wäre allerdings auch, beim Wickelhilfskörper 21 einen verrippten Boden zu verwenden. Möglich wäre es ferner, sowohl den Boden 16 als auch den Boden 23 nach innen oder nach außen zu bombieren, was gegebenenfalls schon bei der Herstellung der Standardrohlinge R1 oder R2 berücksichtigt sein könnte, weil es solche Rohlinge auch bei Spraydosen oder Getränkebehältern gibt.

Dann wird in die Öffnung 19 des Stutzenansatzes 18 die Anschlußarmatur 7 eingesteckt, die einen Einsteckzapfen 27 mit einer umlaufenden Nut 28 besitzt. Durch Rollen, Pressen oder Drücken wird ein Umfangsbereich 30 des Stutzenansatzes 18 in die Nut 28 hineinverformt, zweckmäßigerweise unter Einbringen eines Klebers, damit die Anschlußarmatur dicht und fest gehalten wird (durch einen Pfeil 29 angedeutet).

Das derart fertiggestellte Zwischenprodukt wird dann in eine Wickelvorrichtung eingespannt, wofür die Anschlußarmatur 7 und der Stutzen 24 als Widerlager benutzt werden. Danach wird auf die freie Oberfläche außenseitig eine Wickelbeschichtung 13, z.B. aus Glasfaserrovings 25 und einem Klebeharz, wie Polyester 26, nach einem üblichen Wickelverfahren aufgebracht. Die Wickelbeschichtung 13 erstreckt sich vom oberen Rand des Stutzenansatzes 18 bis in die Kehle des Stutzens 24 oder sogar bis zu dessen freiem Randbereich. Danach kann die Bohrung 10 am freien Ende vergossen werden. Für die Wickelbeschichtung können auch Kohlenstoff- oder Stahlfasern oder Fasern aus anderen hochfesten, leichten Materialien benützt werden.

Wie in den Fig. 1 und 2b angedeutet ist, sind in der Wickelbeschichtung 13 die Glasfaserrovings zunächst überkreuz gewickelt (Linien 13a, 13b). Abschließend werden zumindest auf den zylindrischen Bereichen die Glasfaserrovings 25 in Umfangsrichtung als Bandagen gewickelt (Linien 13c). Die Stärke der Wickelbeschichtung ist größer als die Wandstärke S des Stützkörpers 14, damit eine ausreichende Druckfestigkeit erzielt wird.

Die fertige Oberfläche der Wickelbeschichtung kann gegebenenfalls mit einer Oberflächenbeschichtung oder mit einem zusätzlichen Schutzmantel versehen werden. Denkbar wäre es auch, den Stutzenansatz 18 mit einem Innengewinde zu versehen und die Anschlußarmatur 7 einzuschrauben. Als Wickelhilfskörper 21 könnte auch ein leichter Gitterkörper benutzt werden, insbesondere dann, wenn der Boden 16 für die Druckfestigkeit dick genug oder durch Bombieren versteift ist. Der Einsteckzapfen 27 der Anschlußarmatur 7 könnte auch unmittelbar mit dem Rand des Stutzenansatzes 18 verklebt werden.

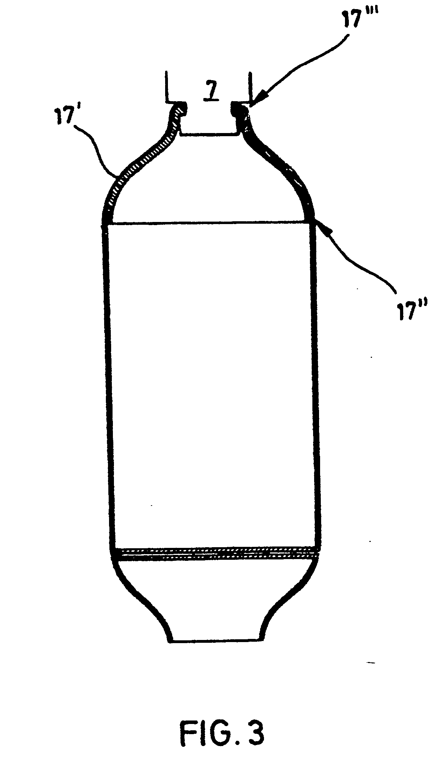

Anstatt den domförmigen Oberteil 17 für den Druckbehälter 1' einteilig mit dem zylindrischen Teil des Stützkörpers 14 herzustellen, kann gemäß Fig. 3 auch ein gesonderter, gewölbter Oberteil 17' mit zweckmäßig gegenüber dem zylindrischen Teil vergrößerter Wandstärke, z.B. 1,5 - 2,5 mm, verwendet werden, der bei 17" mit dem zylindrischen Abschnitt und bei 17''' mit der Anschlußarmatur 7 verklebt ist. Es entfiele dann das Verformen des Standardrohlings R1.

Schließlich ist es auch möglich, als Stützkörper ein dünnwandiges Rohr, an dessen beide Enden gewölbte Abschlußteile, analog dem Teil 17', angesetzt sind, zu verwenden.

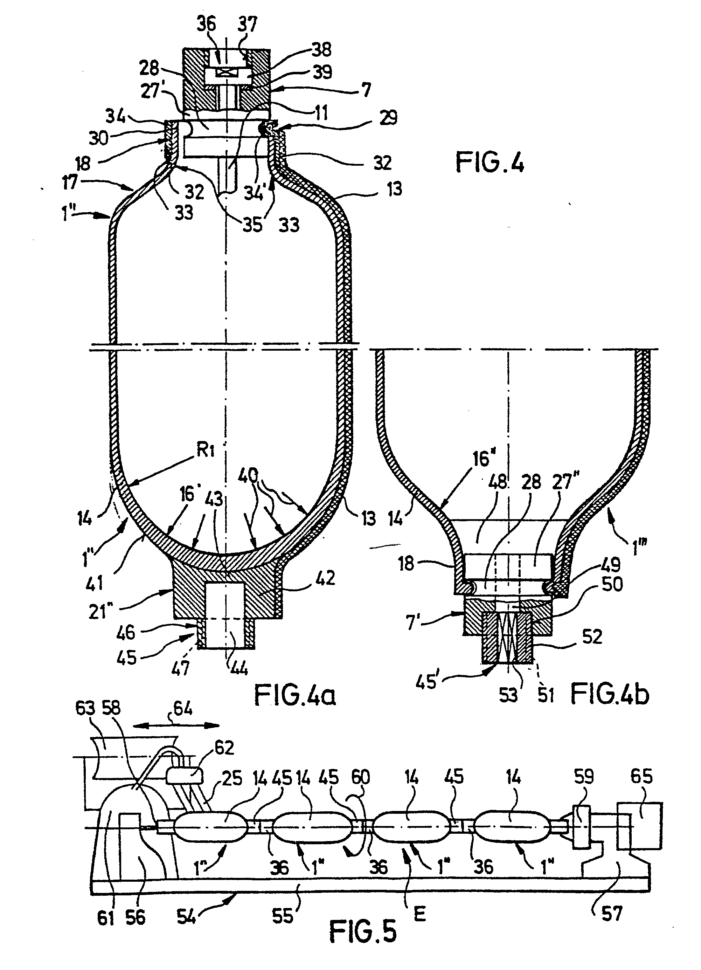

Gemäß Fig. 4 und 4a ist bei einer weiteren Ausführungsform des Drutkbehälters 1" im Behälteroberteil 17 in den Stutzenansatz 18 der Einsteckteil 27' der Anschlußarmatur 7 eingeführt. Das Rohr 11 ragt ins Innere des Druckbehälters 1". Außen umgreift den Rohrstutzen 18 des Stützkörpers 14 eine Versteifungshülse 32, die aus einem ähnlichen Material besteht, wie der Stützkörper, d.h. Aluminiumblech, Stahlblech oder Kunststoff. Die Versteifungshülse 32 schließt mit ihrem oberen Rand 34 annähernd mit dem oberen Rand des Stutzenansatzes 18 ab. Ihr unterer Rand 33 reicht bis zum Übergang 35 zwischen dem Stutzenansatz 18 und dem domförmigen Behälteroberteil 17. Beim Verformen des Stutzenansatzes 18 (angedeutet durch den Pfeil 29) wird die Versteifungshülse 32 mitverformt, so daß sie sich im Bereich der Umfangsnut 28 formschlüssig abstützt. Sie liegt über ihre gesamte Länge auf dem Umfang 30 des Rohrstutzens 18 auf und bewirkt auf diese Weise eine Versteifung des Behälteroberteils 17 im Bereich des Rohrstutzens 18 und im Übergangsbereich 35 gegen ein Nachgeben unter dem Innendruck. Die Wickelbeschichtung 13 schließt die Versteifungshülse 32 gegebenenfalls mit ein, zumindest über einen Teil ihrer Höhenerstreckung. Der verformte Randbereich 34 der Versteifungshülse 32 ist mit 34' angedeutet.

Im oberen Ende des Einsteckteils 27' der Anschlußarmatur 7 ist ein Schraub- oder Steckkupplungsteil 36 vorgesehen, der aus einer Gewindebohrung 37 besteht, die zur Aufnahme eines Schraubkopfes 38 dient, der mit einer Dichtung 39 auf einer Schulter in der Gewindebohrung 37 abgefangen ist. Der Schraubkopf 38 sichert das Rohrelement 11 im Druckbehälter 1". Gleichzeitig bildet der Schraubkopf 38 eine Einschraub-Begrenzung in der Gewindebohrung 37.

Der zugehörige Behälterunterteil des Druckbehälters 1" ist in einer ersten Ausführungsform aus Fig. 4a erkennbar. Bei dieser Ausführungsform ist der Boden 16" des Standardrohlings R1 nach außen bombiert, wie dies durch die Pfeile 40 angedeutet ist. Zweckmäßigerweise wird dies durch ein einfaches, noch vor dem Verformen des oberen Teils des Standardrohlings R1 eingeschobenes Werkzeug bewerkstelligt.

Durch das Bombieren entsteht eine sphärische Außenfläche 41 am Stützkörper 14, die besonders gut zum Aufbringen der Wickelbeschichtung 13 geeignet ist.

Der auf die Außenseite des bombierten Bodens 16' aufgesetzte Wickelhilfskörper 21" ist hier nicht aus einem Standardrohling gebildet, wie bei den vorhergehenden Ausführungsformen, sondern ist ein Ringkörper 42, der einen gegebenenfalls gerundeten Übergang zur Außenfläche 41 hat. Der Wickelhilfskörper 21" kann aufgeklebt, oder, falls es sich um ein Metall handelt, aufgeschweißt sein. Er besitzt aus Gewichtsgründen eine Innenbohrung 44, die, falls der Wickelhilfskörper 21" eine Wölbungsaussteifung für den Boden 16' erbringen soll, durch einen Boden 43 verschlossen ist.

Am Wickelhilfskörper 21" ist bei dieser Ausführungsform ein Gegenelement 45 zum Kupplungsteil 36 am Behälteroberteil 17 vorgesehen. Und zwar besteht dieses hier aus einem Schraubansatz 46 mit einem Außengewinde 47, wobei das Außengewinde 47 in das Innengewinde der Gewindebohrung 37 paßt. Bei der Herstellung des Druckbehälters 1" wird zunächst der Boden 16' bombiert, ehe die bei den Fig. 1 und 2 erwähnten Komponenten ins Innere des Stützkörpers 14 eingebracht werden. Dann wird der Behälteroberteil 17 verformt und schließlich der Einsteckteil 27' der Anschlußarmatur 7 eingeführt, ehe der Rohrstutzen 18 mit der Versteifungshülse 32 verformt werden. Dann wird der Wickelhilfskörper 21" angebracht. Das auf diese Weise geschaffene Zwischenprodukt wird mit weiteren, hinsichtlich der Kupplungsteile 36 und Gegenelemente 45 gleichen Zwischenprodukten in Richtung deren Längsachsen hintereinanderliegend zu einer Wickeleinheit E verbunden, auf die dann in der in Fig. 5 gezeigten Wickelvorrichtung in einem Zug die Wickelbeschichtung 13 aufgebracht werden kann. Die Kupplungsteile 36, 45, 45',50 könnten auch nach Art einer Bajonett-Kupplung zusammenwirken, die sich besonders schnell betätigen läßt.

Fig. 4b zeigt eine andere Ausführungsform des Behälterunterteils bei einem Behälter 1''', wobei auch diese Ausführungsform dazu geeignet ist, wie die vorher erwähnte, mit gleichartigen verbunden und in einem Zug mit einer Wickelbeschichtung versehen zu werden. Der Boden 16" des Stützkörpers 14 ist bei dieser Ausführungsform nicht nur nach außen bombiert, sondern auch geöffnet (Öffnung 48) und zu einem unteren Stutzenansatz 18' verformt, in dem der Einsteckteil 27" einer weiteren Anschlußarmatur 7' festgelegt werden kann, so daß der Druckbehälter 1''' einen oberen und einen unteren Einlaß besitzt. Der Einsteckteil 27" wird wiederum durch Verformen des Stutzenansatzes 18' durch Rollen, Drücken oder Pressen mittels einer Umfangsnut 28 unter Zwischenlage eines Klebers angebracht. Der Einsteckteil 27" besitzt eine durchgehende Innenbohrung und eine nach außen offene Gewindebohrung 50, die mit einer Schulter in die Innenbohrung 49 übergeführt ist. In die Gewindebohrung 50 kann entweder das Gegenelement 45 der Ausführungsform der Fig. 4a oder ein Kupplungsteil bzw. Gegenelement 45' eingeschraubt werden, das als Gewindehülse 51 mit einem Außengewinde 52 und einem Innensechskant 53 ausgebildet ist. Das Element 45' wird nur benötigt, um zum Wickeln der Wickelbeschichtung mehrere solcher Zwischenprodukte miteinander zu verbinden. Am fertigen Druckbehälter 1''' wird das Element 45' nicht mehr gebraucht.

Anhand von Fig. 5 ist erkennbar, daß eine aus mehreren Druckbehälter-Zwischenprodukten für den Druckbehälter 1" gebildete Wickeleinheit E in eine Wickelvorrichtung 54 eingespannt wird, die auf einem Maschinenbett 55 Supporte 56 und 57 mit einem Dorn 58 und einem Spannkopf 59 aufweist. In der Wickelvorrithtung 54 ist die Wickeleinheit E beispielsweise in Richtung eines Pfeiles 60 drehbar, indem der Spannkopf 59 mit einem Antriebsmotor 65 in Antriebsverbindung steht. Auf dem Maschinenbett 55 ist ferner ein Support 61 in Richtung eines Doppelpfeiles 64 verfahrbar gelagert, der ein Wickelelement 62 und eine Vorratsrolle für das Glasfasermaterial (Glasfaserrovings 25) trägt. Zuführeinrichtungen für einen Kleber oder ein Klebeharz, um das Glasfasermaterial zu tränken oder zu benetzen, sind ebenfalls vorgesehen. Die Stützkörper 14 sind mittels der Kupplungsteile 36 und der Gegenelemente 45 fest miteinander verbunden, so daß sie sich unter der Zugbelastung beim Wickeln nicht relativ zueinander verdrehen können.

Durch Drehen der Wickeleinheit E und gleichzeitiges Verfahren des Wickelelementes 62 wird die Wickelbesthichtung in einem Zug aufgebracht. Vor oder nach dem Aushärten der Wickelbeschichtung wird die fertig gewickelte Wickeleinheit E aus der Wickelvorrichtung 44 entnommen. Durch Lösen der Verbindungen zwischen den Druckbehältern 1" werden die einzelnen, fertigen Druckbehälter gewonnen, wobei gegebenenfalls ein Teil der Wickelbeschichtungen in den Trennbereichen auf übliche Weise entfernt wird.

**Patentansprüche**

1. Druckbehälter, insbesondere zur Kältemitteltrocknung in einer Fahrzeug-Klimaanlage, mit einem langgestreckten hohlen Behältergehäuse (2), das einen Boden und einen domförmigen Behälteroberteil (17) mit einem Stutzenansatz (18) besitzt und aus einem inneren, wenigstens einenends offenen Stützkörper (14) und einer auf den Stützkörper (14) außen stoffschlüssig aufgebrachten Wickelbeschichtung (13) aus faserverstärktem Kunststoff besteht, **dadurch gekennzeichnet, daß der Stützkörper (14) ein zylindrischer, einenends offener Standardrohling (R1) aus der Massenproduktion von Spraydosen oder Getränkebehältern ist, dessen offenes Ende durch**

Pressen, Rollen oder Drücken zum Behälteroberteil (17) mit dem Stutzenansatz (18) verformt ist.

2. Druckbehälter nach Anspruch 1, **dadurch gekennzeichnet**, daß an beiden Enden des Stützkörpers (14) zur Druckbehälter-Längsachse koaxiale Kupplungselemente (36, 45, 45') vorgesehen sind, mittels derer zumindest zwei Stützkörper (14) -unteres Ende mit unterem Ende oder unteres Ende mit oberem Ende- in Richtung ihrer Längsachsen hintereinanderliegend zu einer Wickeleinheit (E) verbindbar sind.

3. Druckbehälter nach den Ansprüchen 1 und 2, wobei zumindest auf das geschlossene, dem Behälteroberteil mit dem Stutzenansatz gegenüberliegende Ende des Stützkörpers (14) außen ein Wickelhilfskörper (42, 21, 21') aufgesetzt ist, der in die Wickelbeschichtung (13) einbezogen ist, **dadurch gekennzeichnet**, daß der Wickelhilfskörper (21, 21', 42) einen, vorzugsweise wölbungssteifen, Boden (23) aufweist, der am Boden (16, 16') des Stützkörpers (14) außen anliegt.

4. Druckbehälter nach Anspruch 3, **dadurch gekennzeichnet**, daß die Böden (16, 23) im wesentlichen eben sind.

5. Druckbehälter nach Anspruch 3, **dadurch gekennzeichnet**, daß der Wickelhilfskörper (21, 21') ein zylindrischer Standardrohling (R2) aus der Massenproduktion von Spraydosen oder Getränkebehältern ist, dessen offenes Ende durch Pressen, Rollen oder Drücken domförmig oder konisch verformt ist.

6. Druckbehälter nach Anspruch 5, **dadurch gekennzeichnet**, daß der Wickelhilfskörper (21) aus einem dem Standardrohling (R1) des Stützkörpers (14) gleichartigen, jedoch kürzeren Standardrohling (R2) gebildet ist.

7. Druckbehälter nach Anspruch 3, **daduch gekennzeichnet**, daß der Boden (16') des Stützkörpers (14) nach außen bombiert ist und daß auf dem bombierten Boden (16') der in Form und Durchmesser dem Stutzenansatz (18) des Stützkörpers (14) annähernd gleiche Wickelhilfskörper (21, 21' 42) aufgebracht, z.B. festgeklebt oder festgeschweißt, ist.

8. Druckbehälter nach Anspruch 1 und/oder 2, **dadurch gekennzeichnet**, daß der Boden (16") des Stützkörpers (14) nach außen bombiert und durchbrochen ist und einen dem Stutzenansatz (18) am Behälteroberteil (17) entgegengesetzt gerichteten Stutzenansatz (18'), vorzugsweise einstückig, aufweist.

9. Druckbehälter nach Anspruch 1 und/oder 2, **dadurch gekennzeichnet**, daß der Stützkörper (14) ein Aluminiumblech-, Kunststoff- oder Stahlblech-Standardrohling ist.

10. Druckbehälter nach Anspruch 9, **dadurch gekennzeichnet**, daß die Wandstärke (s) des Stützkörpers (14) im zylindrischen Teil annähernd 0,45 mm beträgt.

11. Druckbehälter nach den Ansprüchen 1 und 2, **dadurch gekennzeichnet**, daß im Stutzenansatz (18) eine Anschlußarmatur (7) mit einem zapfenartigen Einsteckteil (27) festgelegt ist, daß der Einsteckteil (27) wenigstens eine umlaufende Nut (28) aufweist, daß ein Umfangsbereich (30) des Stutzenansatzes (18) durch Rollen, Pressen oder Drücken bis zum Eingriff in die Umfangsnut (28) verformt ist und daß zwischen dem Einsteckteil (27) und dem Stutzenansatz (18) ein Haftmittel, vorzugsweise ein Kleber, eingebracht ist.

12. Druckbehälter nach den Ansspürüchen 1 und 2, **dadurch gekennzeichnet**, daß im Stutzenansatz (18) ein zapfenartiger Einsteckteil (27') einer Anschlußarmatur (7) festgelegt ist, in dem ein das eine Kupplungselement (36) bildender Schraub-, Bajonett- oder Steckkupplungsteil (37) angeordnet ist, und daß am Wickelhilfskörper (42) ein zum Schraub-, Bajonett- oder Steckkupplungsteil (37) passendes, das andere Kupplungselement (45) bildendes Gegenelement (46) vorgesehen ist.

13. Druckbehälter nach Anspruch 12, **dadurch gekennzeichnet**, daß der Schraub-, Bajonett- oder Steckkupplungsteil (37) eine Gewinde- oder Bajonettbohrung und das Gegenelement (46) ein Ansatz mit einem Außengewinde (47) oder einem Bajonett-Element ist.

14. Druckbehälter nach Anspruch 13, **dadurch gekennzeichnet**, daß der Schraub-, Bajonett- oder Steckkupplungsteil (37) eine Gewindebohrung zum Festlegen eines ins Innere des Druckbehälters reichenden Armaturenelements (11, 38) ist, und daß das eingeschraubte Armaturenelement (11, 38) einen die Schraubtiefe des Gegenelementes (46) begrenzenden Anschlag für den Schraubansatz eines gleichartigen, weiteren Druckbehälters ist.

15. Druckbehhälter nach Anspruch 8, **dadurch gekennzeichnet**, daß im am Behälteroberteil (17) angeordneten Stutzenansatz (18) und im am Boden (16") des Stützkörpers (14) angeordneten Stutzenansatz (18') jeweils ein Einsteckteil (27') einer Anschlußarmatur (7, 7') festgelegt ist, daß beide Einsteckteile (27, 27') nach außen offene Gewindebohrungen (37, 50) besitzen, und daß zur koaxialen Verbindung gleichartiger Druckbehälter (1''', 1'') ein wegnehmbares Gewindekupplungsteil (45') in beide Gewindebohrungen (50, 37) einschraubbar ist.

16. Druckbehälter nach Anspruch 11, **dadurch gekennzeichnet**, daß zumindest der Stutzenansatz (18) des Stützkörpers (14) im Bereich des Behälteroberteils (17) von einer kragenförmigen Versteifungshülse (32) umfaßt ist, die sich bis zum Übergangsbereich (36) vom Stutzenansatz (18) in den domförmig verformten Stützkörperoberteil erstreckt, und die, vorzugsweise mit dem Stutzenansatz (18) durch Rollen, Pressen oder Drücken gemeinsam, verformt ist.

17. Verfahren zum Herstellen eines Druckbehälters, insbesondere eines Trocknerbehälters für eine Fahrzeugklimaanlage, bei dem auf die Außenseite eines hohlen Stützkörpers eine Wickelbeschichtung aus faserverstärktem Kunststoff aufgebracht wird, **dadurch gekennzeichnet,** daß ein zylindrischer, einenends offener Standardrohling aus der Massenproduktion von Spraydosen oder Getränkebehältern im Bereich des späteren Behälteroberteils domförmig verformt und die Wickelbeschichtung anschließend aufgebracht wird.

18. Verfahren nach Anspruch 17, **dadurch gekennzeichnet,** daß der zylindrische Standardrohling aus der Massenproduktion von Spraydosen oder Getränkebehältern vor dem Verformen im späteren Behälteroberteil bodenseitig nach außen bombiert wird.

19. Verfahren nach Anspruch 17, wobei vor dem Aufbringen der Wickelbeschichtung an zumindest einem Ende des Stützkörpers ein Wickelhilfskörper angebracht wird, **dadurch gekennzeichnet,** daß der Wickelhilfskörper aus einem Standardrohling aus der Massenproduktion von Spraydosen oder Getränkebehältern gebildet wird.

20. Verfahren nach Anspruch 18, **dadurch gekennzeichnet,** daß beim Bombieren des Bodens des Standardrohlings der Boden geöffnet und zu einem bodenseitigen Stutzenansatz verformt bzw. mit einem Stutzenansatz versehen wird, ehe die Wickelbeschichtung unter Benutzung des bombierten Bodens und des dort angeordneten Stutzenansatzes als Wickelhilfskörper aufgebracht wird.

21. Verfahren nach Anspruch 17, wobei der Stützkörper in einer Wickelvorrichtung eingespannt gehalten und die Wickelbeschichtung durch Drehen des Stützkörpers und/oder wenigstens eines Wickelelementes bei gleichzeitiger relativer Vorschubbewegung zwischen dem Stützkörper und dem Wickelelement in Richtung der Längsachse des Stützkörpers gebildet wird, **dadurch gekennzeichnet,** daß mehrere Stützkörper in Richtung ihrer Längsachsen aneinandergereiht und miteinander zu einer Wickeleinheit verbunden werden, daß die Wickeleinheit in der Wickelvorrichtung in einem Zug mit der Wickelbeschichtung versehen wird und daß die mit der Wickelbeschichtung versehene Wickeleinheit anschließend in einzelne, wickelbeschichtete Druckbehälter aufgeteilt wird.

22. Verwendung von zylindrischen Standardrohlingen (R1, R2) aus der Massenproduktion von Spraydosen oder Getränkebehältern als Stützkörper (14) und gegebenenfalls als Wickelhilfskörper (21, 21') zur Herstellung von durch eine außenseitige Wickelbeschichtung aus faserverstärktem Kunststoff innendruckfest gemachten Druckbehältern, insbesondere Kältemittel-Trocknerbehältern für Fahrzeug-Klimaanlagen.

## Claims

1. A pressure container, more particularly for drying the refrigerant in a motor vehicle air-conditioning system, comprising an elongate hollow container housing (2) having a base and a dome-shaped top part (17) with a neck (18), and consisting of an inner shell (14) open at one end at least and a fibre reinforced plastic winding (13) applied contiguously to the outside of the shell (14), characterised in that the shell (14) is a cylindrical standard blank (R1) open at one end obtained from the mass production of aerosols or beverage containers, the open end thereof being subjected to deformation by pressing, rolling or spinning to form the top part (17) of the container with the neck (18).

2. A pressure container according to claim 1, characterised in that coupling elements (36, 45, 45') which are coaxial to the pressure container longitudinal axis are provided at both ends of the shell (14), by means of which coupling elements at least two shells (14) are adapted to be connected - tail to tail or tail to head - consecutively in the direction of their longitudinal axes to form a winding unit (E).

3. A pressure container according to claims 1 and 2, a winding former (42, 21, 21') which is included in the winding (13) being applied at least to the outside of the closed end of the shell (14) situated opposite the top part having the neck, characterised in that the winding former (21, 21', 42) has an end (23), which is preferably rigid in respect of curvature and which bears externally against the base (16, 16') of the shell (14).

4. A pressure container according to claim 3, characterised in that the end (23) and the base (16) are substantially flat.

5. A pressure container according to claim 3, characterised in that the winding former (21, 21') is a cylindrical standard blank (R2) from the mass production of aerosols or beverage containers, the open end of which is deformed to be dome-shaped or conical by pressing, rolling or spinning.

6. A pressure container according to claim 5, characterised in that the winding former (21) is formed from a standard blank (R2) which is similar to but shorter than the standard blank (R1) of the shell (14).

7. A pressure container according to claim 3, characterised in that the base (16') of the shell (14) is curved outwards and in that the former (21, 21', 42), which is substantially identical in shape and diameter to the neck (18) of the shell (14) is applied, for example glued or welded, to the curved base (16').

8. A pressure container according to claim 1 and/or 2, characterised in that the base (16") of the shell (14) is curved outwards and is pierced and comprises, preferably in one piece, a neck (18') extending in the opposite direction to the neck (18) on the top part (17) of the container.

9. A pressure container according to claim 1 and/or 2, characterised in that the shell (14) is a sheet aluminium, plastic or sheet steel standard blank.

10. A pressure container according to claim 9, characterised in that the wall thickness (s) of the shell (14) is approximately 0.45 mm in the cylindrical part.

11. A pressure container according to claims 1 and 2, characterised in that a connecting fitting (7) having a push-in member (27) in the form of a plug is fixed in the neck (18), in that the push-in member (27) has at least one peripheral groove (28), in that a peripheral zone (30) of the neck (18) is deformed by rolling, pressing or spinning until it engages in the peripheral groove (28), and in that an adhesive agent, preferably a cement, is introduced between the push-in member (27) and the neck (18).

12. A pressure container according to claims 1 and 2, characterised in that a push-in member (27') in the form of a plug forming part of a connecting fitting (7) is fixed in the neck (18), there being provided a screw, bayonet or plug-in coupling member (37), which forms a coupling element (36), and in that a co-acting element (46) forming the other coupling element (45) and mating with the screw, bayonet or plug-in coupling member (37) is provided on the winding former (42).

13. A pressure container according to claim 12, characterised in that the screw, bayonet or plug-in coupling member (37) is a screwthreaded or bayonet bore and the co-acting element (46) is a projection with an external screwthread (47) or with a bayonet element.

14. A pressure container according to claim 13, characterised in that the screw, bayonet or plug-in coupling member (37) is a screwthreaded bore to fix a fitting element (11, 38) extending into the interior of the pressure container, and in that the screwed-in fitting element (11, 38) is a stop which limits the depth to which the co-acting element (46) can be screwed in and which is intended for the screw projection of another similar pressure container.

15. A pressure container according to claim 8, characterised in that a push-in member (27') of a connecting fitting (7, 7') is fixed in the neck (18) disposed at the top part (17) of the container and in the neck (18') disposed at the base (16") of the shell (14), in that the two push-in members (27, 27') have outwardly open screwthreaded bores (37, 50), and in that a removable screw-threaded coupling member (45') is adapted to be screwed into the two screwthreaded bores (50, 37) for the coaxial connection of similar pressure containers (1''', 1'').

16. A pressure container according to claim 11, characterised in that at least the neck (18) of the shell (14) is enclosed by a stiffening sleeve (32) in the form of a collar in the region of the top part (17) of the container, such sleeve extending as far as the transition zone (36) from the neck (18) to the dome-shaped top part of the shell, said sleeve preferably being jointly deformed with the neck (18) by rolling, pressing or spinning.

17. A method of producing a pressure container, more particularly a drier container for a motor vehicle air conditioning system, in which a fibre reinforced plastic winding is applied to the outside of a hollow shell, characterised in that a cylindrical standard blank open at one end and obtained from the mass production of aerosols or beverage containers is subjected to deformation to form a dome in the region of the subsequent top part of the container and the winding is applied subsequently.

18. A method according to claim 17, characterised in that the cylindrical standard blank from the mass production of aerosols or beverage containers is curved outwardly at the end in the subsequent top part of the container before the deformation.

19. A method according to claim 17, in which, before the winding is applied, a winding former is applied to at least one end of the shell, characterised in that the winding former is formed from a standard blank from the mass production of aerosols or beverage containers.

20. A method according to claim 18, characterised in that during the curving of the end of the standard blank the end is opened and is subjected to deformation to form an end neck or is provided with a neck before the winding is applied using the curved end and the neck there as a winding former.

21. A method according to claim 17, in which the shell is clamped in a winding device and the winding is formed by rotating the shell and/or at least one winding element with a simultaneous relative feed movement between the shell and the winding element in the direction of the longitudinal axis of the shell, characterised in that a plurality of shells are arranged contiguously in the direction of their longitudinal axes and are interconnected to form a winding unit, in that the winding unit is provided with the winding in the winding device in one operation and in that the winding unit provided with the winding is then divided up into individual pressure containers provided with the winding.

22. Use of cylindrical standard blanks (R1, R2) obtained from the mass production of aerosols or beverage containers as shells (14) and, if required, as winding formers (21, 21') for the production of pressure containers rendered internally pressure-tight by means of a fibre reinforced plastic winding applied to the outside, more particularly refrigerant drier containers for motor vehicle air conditioning systems.

**Revendications**

1. Réservoir sous pression, en particulier pour la déshydratation de réfrigérants dans une installation de conditionnement d'air de véhicules, avec un boîtier de réservoir creux (2) s'étendant en longueur, présentant un fond et une partie supérieure de réservoir (17) en forme de dôme avec une tubulure de raccord (18) et consistant en un corps d'appui intérieur (14) ouvert au moins d'un côté et un revêtement enroulé extérieur (13) en matière plastique renforcée de fibres, placé de manière étanche à la poussière, caractérisé en ce que le corps d'appui (14) est une pièce brute standard (R1) cylindrique, ouverte d'un côté, de la production en masse de bombes de vaporisation ou de réservoirs à boissons, dont l'extrémité ouverte est déformée, par pressage, roulement ou pression, en la partie supérieure de réservoir (17) avec la tubulure de raccord (18).

2. Réservoir sous pression suivant la revendication 1, caractérisé en ce qu'il est prévu, aux deux extrémités du corps d'appui (14), des éléments de couplage (36, 45, 45') coaxiaux à l'axe longitudinal du réservoir sous pression, à l'aide desquels peuvent être reliés au moins deux corps d'appui (14) - extrémité inférieure à extrémité inférieure ou extrémité supérieure à extrémité supérieure -, l'un derrière l'autre dans le sens de leurs axes longitudinaux, en un ensemble d'enroulement (E).

3. Réservoir sous pression suivant les revendications 1 et 2, dans lequel il est placé un corps auxiliaire d'enroulement (42, 21, 21'), à l'extérieur, au moins sur l'extrémité ouverte, opposée à la partie supérieure de réservoir avec la tubulure de raccord, du corps d'appui (14), caractérisé en ce que le corps auxiliaire d'enroulement (21, 21', 42) présente un fond (23), de préférence à bombage rigide, qui s'appuie à l'extérieur sur le fond (16, 16') du corps d'appui (14).

4. Réservoir sous pression suivant la revendication 3, caractérisé en ce que les fonds (16, 23) sont sensiblement plats.

5. Réservoir sous pression suivant la revendication 3, caractérisé en ce que le corps auxiliaire d'enroulement (21, 21') est une pièce brute standard (R2) de la production en masse de bombes de vaporisation ou de récipients à boissons dont l'extrémité ouverte est déformée en formé de dôme ou conique par pressage, roulement ou pression.

6. Réservoir sous pression suivant la revendication 5, caractérisé en ce que le corps auxiliaire d'enroulement (21) est formé d'une pièce brute standard (R2) similaire à la pièce brute standard (R1) du corps d'appui (14), toutefois plus courte.

7. Réservoir sous pression suivant la revendication 3, caractérisé en ce que le fond (16) du corps d'appui (14) est bombé vers l'extérieur et que sur le fond bombé (16') est placé, par exemple collé ou soudé, le corps auxiliaire d'enroulement (21, 21', 42) environ égal, en forme et diamètre, à la tubulure de raccord (18) du corps d'appui (14).

8. Réservoir sous pression suivant la revendication 1 et/ou 2, caractérisé en ce que le fond (16") du corps d'appui (14) est bombé vers l'extérieur et percé et présente, de préférence en une seule pièce, une tubulure de raccord (18') orientée opposée à la tubulure de raccord (18) à la partie supérieure de réservoir (17).

9. Réservoir sous pression suivant la revendication 1 et/ou 2, caractérisé en ce que le corps d'appui (14) est une pièce brute standard en tôle d'aluminium, en matière plastique ou en tôle d'acier.

10. Réservoir sous pression suivant la revendication 10, caractérisé en ce que l'épaisseur de paroi (s) du corps d'appui (14) dans la partie cylindrique est d'environ 0,45 mm.

11. Réservoir sous pression suivant les revendications 1 et 2, caractérisé en ce que dans la tubulure de raccord (18) est fixée une garniture de racordement (7) à élément d'encliquetage en forme de pivot (27), que l'élément d'encliquetage (27) présente au moins une rainure périphérique (18), qu'une zone périphérique (30) de la tubulure de raccord (18) est déformée, par roulement, pressage ou pression, jusqu'à s'engager dans la rainure périphérique (28) et qu'entre l'élément d'encliquetage (27) et la tubulure de raccord (18) est placé un moyen d'adhésion, de préférence une colle.

12. Réservoir sous pression suivant les revendications 1 et 2, caractérisé en ce que dans la tubulure de raccord (18) est fixée un élément d'encliquetage (27') en forme de pivot d'une garniture de raccordement (7), dans lequel est disposé un élément de couplage à vis, à baïonnette ou à encliquetage (37) formant l'un des élément de couplage (36) et qu'au corps auxiliaire d'enroulement (42) est prévu un contre-élément (46) adapté à l'élément de couplage à vis, à baïonnette ou à encliquetage (37) et formant l'autre élément de couplage (45).

13. Réservoir sous pression suivant la revendication 12, caractérisé en ce que l'élément de couplage à vis, à baïonnette ou à encliquetage (37) est un alésage taraudé ou à baïonnette et le contre-élément (46) un raccord à filet extérieur (47) ou un élément à baïonnette.

14. Réservoir sous pression suivant la revendication 13, caractérisé en ce que l'élément de couplage à vis, à baïonnette ou à encliquetage (37) est un alésage taraudé pour la fixation d'un élément de garniture (11, 38) s'étendant jusqu'à l'intérieur du réservoir sous pression et que l'élément de garniture (11, 38) vissé est une butée limitant la profondeur de vissage du contre-élément (46) pour le raccordement vissé d'un autre réservoir similaire.

15. Réservoir sous pression suivant la revendication 8, caractérisé en ce que dans la tubulure de raccord (18) disposée sur la partie supérieure de réservoir (17) et dans la tubulure de raccord (18') disposée sur le fond (16") du corps d'appui (14) est chaque fois fixé un élément d'encliquetage (27') d'une garniture de raccordement (7, 7'), que les deux éléments d'encliquetage (27, 27') présentent des alésages taraudés (37, 50) ouverts vers l'extérieur et que qu'un élément de couplage fileté (45') amovible peut être vissé dans les deux alésages taraudés (37, 50), pour la connexion coaxiale de réservoirs sous pression (1‴, 1″) similaires.

16. Réservoir sous pression suivant la revendication 11, caractérisé en ce qu'au moins la tubulure de raccord (18) du corps d'appui (14) est entourée, à l'endroit de la partie supérieure de réservoir (17), d'une douille de renforcement (32) en forme de collerette qui s'étend jusqu'à la zone de passage (36) de la tubulure de raccord (18) à la partie supérieure de corps d'appui déformée en forme de dôme et qui est déformée, de préférence ensemble avec la tubulure de raccord (18), par roulement, pressage ou pression.

17. Procédé de fabrication d'un réservoir sous pression, en particulier d'un réservoir déshydrateur pour une installation de conditionnement d'air pour véhicule, dans lequel il est placé un revêtement enroulé en matière plastique renforcée de fibres sur la face extérieure d'un corps d'appui creux, caractérisé en ce qu'une pièce brute standard cylindrique, ouverte à une extrémité, de la production en masse de bombes de vaporisation ou de récipients à boissons est déformée en forme de dôme dans la zone de la future partie supérieure de réservoir et que le revêtement enroulé est ensuite placé.

18. Procédé suivant la revendication 17, caractérisé en ce que la pièce brute standard cylindrique de la production en masse de bombes de vaporisation ou de récipients à boissons est, du côté du fond, avant la déformation, bombée vers l'extérieur, dans la future partie supérieure de réservoir.

19. Procédé suivant la revendication 17, dans lequel, avant la pose du revêtement enroulé, un corps auxiliaire d'enroulement est placé sur au moins une extrémité du corps d'appui, caractérisé en ce que le corps auxiliaire d'enroulement est formé à partir d'une pièce brute standard de la production en masse de bombes de vaporisation ou de récipients à boissons.

20. Procédé suivant la revendication 18, caractérisé en ce que, lors du bombage du fond de la pièce brute standard, le fond est ouvert et déformé en une tubulure de raccord du côté du fond ou pourvu d'une tubulure de raccord, avant que ne soit posé le revêtement enroulé avec utilisation, comme corps auxiliaire d'enroulement, du fond bombé et de la tubulure de raccord y placée.

21. Procédé suivant la revendication 17, dans lequel le corps d'appui est maintenu serré dans un dispositif d'enroulement et le revêtement enroulé est formé par rotation du corps d'appui et/ou d'au moins un élément d'enroulement avec mouvement d'avance relatif similaire entre le corps d'appui et l'élément d'enroulement dans le sens de l'axe longitudinal du corps d'appui, caractérisé en ce que plusieurs corps d'appui sont placés l'un à côté de l'autre en une rangée dans le sens de leurs axes longitudinaux et reliés l'un à l'autre en un ensemble d'enroulement, que l'ensemble d'enroulement est pourvu, en une seule opération, du revêtement enroulé dans le dispositif d'enroulement et que l'ensemble d'enroulement pourvu du revêtement enroulé est ensuite divisé en réservoirs sous pression individuels à revêtement enroulé.

22. Utilisation de pièces brutes standard cylindriques (R1, R2) de la production en masse de bombes de vaporisation ou de récipients à boissons comme corps d'appui (14) et éventuellement comme corps auxiliaires d'enroulement (21, 21') pour la fabrication de réservoirs sous pression, en particulier de récipients déshydrateurs du réfrigérant pour installations de conditionnement d'air de véhicules, rendus résistants à la pression intérieure par un revêtement enroulé du côté extérieur en matière plastique renforcée de fibres.

FIG. 1          FIG. 2a     FIG. 2b

FIG. 3

FIG.4

FIG.4a

FIG.4b

FIG.5